# FASCICULE DE BREVET EUROPEEN

(11) **EP 1 152 904 B1**
(45) Date de publication et mention de la délivrance du brevet: **14.05.2003**
(21) Numéro de dépôt: 00901109.9
(22) Date de dépôt: 17.01.2000
(51) Int. Cl.: B41M 5/26

(54) **PROCEDE DE MARQUAGE ET ARTICLE SUSCEPTIBLE D'ETRE MARQUE AVEC UN LASER**
MARKIERUNGSVERFAHREN UND LASERBESCHRIFTBARER ARTIKEL
METHOD FOR MARKING AN ITEM THAT CAN BE MARKED BY A LASER

(30) Priorité: 20.01.1999 FR 9900677
(43) Date de publication de la demande: 14.11.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: BOISSONNET, Monique, F-63100 Clermont-Ferrand (FR)
(74) Mandataire: Diernaz, Christian
(86) Numéro de dépôt international: EP0000327
(87) Numéro de publication internationale: WO00043213

(56) Documents cités:
- EP-A- 0 684 144
- EP-A- 0 708 147
- EP-A- 0 827 980
- EP-A- 0 841 187
- WO-A-97/21550
- WITAN K: "FARBIGE LASERMARKIERUNGEN AUF KUNSTSTOFFTEILEN" F & M. FEINWERKTECHNIK MIKROTECHNIK MESSTECHNIK,DE,CARL HANSER GMBH, MUNCHEN, vol. 102, no. 10, 1 octobre 1994 (1994-10-01), pages LS75-77, XP000470671 ISSN: 0944-1018

## Description

L'invention concerne un procédé de marquage d'un motif formé d'au moins deux couleurs contrastant sur une surface d'un article en caoutchouc de couleur noire ou sombre, notamment un pneumatique, ledit procédé employant un laser en mode impulsionnel. Cette invention concerne également les articles à base de caoutchouc comportant un marquage coloré réalisé avec un procédé de marquage utilisant un laser en mode impulsionnel.

Pour réaliser, sur la surface d'un pneumatique, un marquage selon un motif déterminé et dont la couleur est différente de la couleur initiale de la surface noire dudit pneumatique et contraste avec elle, il est connu, par exemple dans US 5,478,426, de placer, pendant la fabrication du pneumatique de couleur noire, une couche de caoutchouc de couleur non noire au voisinage de ladite surface avant de la recouvrir d'une couche de caoutchouc de couleur noire et de procéder ensuite au moulage et à la vulcanisation dudit pneumatique dans un moule. Pour faire apparaître un motif ayant la couleur de la couche de caoutchouc sous-jacente, on enlève la couche de recouvrement sur toute son épaisseur et selon ledit motif. L'enlèvement de la couche externe est réalisé au moyen d'un faisceau laser.

Le procédé de réalisation d'un motif coloré à la surface de ce pneumatique au moyen d'un laser est réglé pour éliminer une épaisseur de caoutchouc de recouvrement fixée et choisie au préalable. Par exemple, dans le brevet US 5,478,426 il est proposé d'employer pour le caoutchouc de recouvrement une formulation de mélange de caoutchouc ayant une sensibilité plus grande au rayonnement laser que le mélange de caoutchouc sous-jacent,

Toutefois, le moulage du pneumatique s'accompagne de divers mouvements des mélanges de caoutchouc sous l'action des forces de moulage et d'une montée en température desdits mélanges provoquant leur ramollissement; ces mouvements sont en outre amplifiés par le moulage de motifs formés en relief sur la surface extérieure dudit pneumatique. Il résulte de ces mouvements, dus à l'opération de moulage, que la position de l'interface commune entre les mélanges de couleurs différentes mesurée par rapport à la surface externe du pneumatique peut présenter de plus ou moins grandes variations. Il s'ensuit que pour obtenir un motif coloré satisfaisant, il est souvent nécessaire de faire plusieurs passages du faisceau laser : des zones de couleur n'étant pas visibles dès le premier passage, un deuxième, voire un troisième passages sont indispensables.

D'autre part, ce procédé altère la surface du pneumatique puisqu'une partie de l'épaisseur du mélange de surface est enlevée sur une plus ou moins grande profondeur, ce qui peut avec le temps être source d'une fatigue locale du mélange de caoutchouc plus importante.

Il est à noter que ce procédé est coûteux puisqu'il nécessite la mise en place de plusieurs mélanges de gomme de couleurs différentes et qu'en outre, il est très consommateur d'énergie puisqu'il est requis d'enlever une épaisseur de mélange de gomme plus ou moins grande. Il est également évident que la réalisation de motifs formés d'au moins deux parties de couleurs différentes est quasiment impossible à réaliser avec ce procédé, sinon à disposer très précisément les mélanges colorés les uns par rapport aux autres.

La demande de brevet EP 0 327 508 décrit un procédé pour l'inscription par laser de matériaux organiques, consistant à incorporer dans la formulation desdits matériaux au moins un adjuvant décolorant photosensible au rayonnement d'un laser et un composé non décolorant et moins photosensible jouant le rôle de pigment dont la couleur est révélée selon un motif voulu après exposition au laser. L'action du laser sur l'adjuvant décolorant photosensible entraîne une décoloration dudit adjuvant laissant alors apparaître la couleur du composé insensible au laser.

Ce procédé, s'il ne perturbe pas la surface de l'objet à marquer comparativement au précédent procédé décrit, nécessite toutefois la présence d'au moins deux adjuvants décolorants photosensibles, tel un pigment azoïque ou indanthène, pour réaliser un motif formé d'au moins deux couleurs distinctes. Il est connu que ces adjuvants sont très coûteux : pour fixer un ordre de grandeur, au moment du dépôt de la présente demande ces produits sont quasiment cent fois plus chers que les charges communément employées dans l'industrie du pneumatique, tel le noir de carbone.

L'objet de l'invention concerne un procédé de marquage par laser d'un motif coloré formé d'au moins deux couleurs distinctes sur la surface d'un article en caoutchouc qui ne présente pas les inconvénients liés aux procédés qui viennent d'être rappelés et qui, entre autre, ne provoque pas de dégradation apparente de l'état de la surface de l'article marqué.

Le procédé selon l'invention permet de réaliser, notamment sur une surface d'un pneumatique ou de tout article comportant en surface au moins une composition de caoutchouc, un marquage consistant en un motif formé d'au moins deux couleurs différentes, lesdites couleurs contrastant avec la couleur sombre ou noire de la surface initiale dudit pneumatique ou article et cela sans enlèvement de matière visible à l'oeil nu (et donc sans altération de l'état de surface). Le procédé selon l'invention ne nécessite pas le recours à l'emploi de pigments décolorants photosensibles.

Dans ce but, le procédé de marquage d'un motif formé d'au moins deux parties de couleurs différentes sur un article de caoutchouc comportant une surface à marquer de couleur sombre ou noire comporte les étapes suivantes :
- préparation d'une composition de caoutchouc de couleur claire, utilisable pour la fabrication de l'article de façon à former au moins une partie de la surface destinée à être marquée, ladite composition comportant au moins un élastomère et au moins deux agents colorants de couleurs claires différentes donnant, après mélange, sa couleur initiale à ladite composition;
- incorporation dans la composition précédemment obtenue d'un agent masquant avec un taux inférieur à 15 pce (c'est-à-dire : 15 parties en poids pour 100 parties d'élastomère(s)) pour assombrir et/ou masquer la couleur initiale de la composition de caoutchouc;
- confection, moulage de l'article comportant en surface au moins la composition de caoutchouc de couleur sombre ou noire;
- réalisation de la première partie du motif sur ladite surface au moyen d'un laser délivrant un faisceau d'impulsions de caractéristiques appropriées pour interagir avec l'agent masquant, ledit motif obtenu ayant une couleur claire et contrastant avec la couleur sombre ou noire de la surface voisine de l'article (cette couleur correspond sensiblement à la couleur résultant du mélange des agents colorants);
- sur la première partie du motif, réalisation de la deuxième partie du motif d'une couleur différente de la couleur de la partie de motif obtenue à l'étape précédente, au moyen d'un laser délivrant un faisceau d'impulsions de caractéristiques appropriées pour interagir avec l'un des agents colorants présents dans le matériau après la première étape.

Cette dernière opération du procédé peut bien sûr être renouvelée pour faire apparaître d'autres parties de motif de couleurs différentes des deux premières couleurs obtenues, il suffit pour cela d'introduire un nombre approprié d'agents colorants de couleurs distinctes dans la composition initiale.

Par faisceau d'impulsions de caractéristiques appropriées pour interagir soit avec l'agent masquant soit avec un agent colorant, on entend ici un faisceau obtenu par exemple au moyen d'un laser de type Yag avec multiplicateur de fréquence et pouvant délivrer une série d'impulsions présentant des durées d'impulsions appropriées pour interagir avec ledit agent masquant ou colorant afin de l'éliminer de façon sélective; ces durées d'impulsions sont préférentiellement choisies entre 300 nanosecondes et quelques dizaines de nanosecondes.

Par agent colorant de couleur claire, on entend un agent colorant ayant une couleur essentiellement différente de la couleur noire et pouvant interagir avec un faisceau laser délivrant des impulsions présentant des caractéristiques spécifiques de fréquence / durée d'impulsion / longueur onde appropriées pour extraire ledit agent.

Par composition de caoutchouc de couleur claire, on entend dans la présente description une composition blanche ou colorée par au moins deux agents de couleur claire, c'est-à-dire une composition d'une couleur essentiellement non noire. Cette composition peut être renforcée d'au moins une charge elle même blanche ou colorée, en particulier de silice, une telle composition pouvant être utilisée dans la fabrication de pneumatiques.

Préférentiellement pour la réalisation de pneumatiques, on utilise un élastomère ou caoutchouc "diénique", c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par agent masquant, on entend un agent de couleur sombre ou noire choisi, par exemple, parmi les charges suivantes : noir de carbone, pigments minéraux de couleur sombre ou noire; cet agent masquant a pour rôle de modifier la couleur initiale de la composition en l'assombrissant voire en la noircissant plus ou moins selon le pourcentage d'agent masquant employé.

Il a été ainsi découvert de manière surprenante et inattendue que l'incorporation à taux faible et contrôlé d'un agent masquant de couleur noire ou sombre dans une composition comportant au moins deux agents colorants distincts, bien que modifiant en l'assombrissant voire en la masquant totalement, la couleur initiale de ladite composition, permet d'obtenir une composition de caoutchouc utilisable pour la fabrication d'articles en caoutchouc, comme des pneumatiques, ladite composition présentant l'avantage de pouvoir être marquée avec une source de rayonnement laser utilisée en mode impulsionnel pour obtenir au moins un motif formé de plusieurs couleurs différentes et distinctes de la couleur sombre ou noire de ladite composition.

Sous l'action d'un premier rayonnement laser, le taux d'agent masquant de couleur noire/sombre dans la composition de caoutchouc est localement réduit, ce qui a pour effet d'éclaircir la couleur de la composition de caoutchouc et d'obtenir une couleur plus ou moins proche de la couleur initiale de ladite composition de caoutchouc dépourvue de cet agent masquant.

Par couleur plus ou moins proche de la couleur initiale de ladite composition de caoutchouc, on entend que la couleur du motif obtenu est une nuance de ladite couleur initiale résultant du mélange des différents agents colorants, c'est-à-dire plus ou moins claire ou sombre mais de toute façon contrastant suffisamment avec la couleur sombre du mélange de caoutchouc (résultat du mélange des couleurs des agents colorants de couleur claire et de l'agent masquant de couleur noire/sombre) pour être visible à l'oeil nu.

Au delà d'un taux de 15 pce (c'est-à-dire 15 parties en poids d'agent masquant pour 100 parties d'élastomère), on a souvent constaté qu'il était impossible de révéler de manière satisfaisante et avec un contraste suffisant la couleur initiale de la composition de caoutchouc au moyen d'un faisceau laser employé en mode impulsionnel.

En dessous d'un taux de 0.2 pce d'agent masquant, il est en général impossible de masquer de façon suffisante la couleur initiale de la composition de caoutchouc de façon à pouvoir obtenir, au moyen d'un laser impulsionnel, un motif présentant un contraste suffisant pour être visible.

Le procédé selon l'invention offre l'avantage de permettre, à chaque étape, la réalisation de motifs présentant, pour chaque couleur révélée, des niveaux de dégradés de ladite couleur notamment en adaptant l'énergie délivrée par le faisceau laser, la fréquence de l'impulsion et la vitesse de balayage dudit faisceau sur la surface de l'article, étant entendu, qu'il est possible de combiner ces différents paramètres de façon appropriée.

Avantageusement, le rapport des poids de l'ensemble des agents colorants de couleur non noire sur le poids de l'agent masquant de couleur noire ou sombre est choisi en fonction des caractéristiques de tonalité chromatique, d'intensité et de pureté desdits agents colorants.

Par laser délivrant un faisceau impulsionnel, on entend, par exemple, un laser fonctionnant en mode pulsé ou Q-switché. Pour rappel, un faisceau laser prend naissance dans une cavité solide ou gazeuse subissant une intense excitation électrique ou lumineuse. La puissance délivrée par la source laser dépend entre autres paramètres de son mode de fonctionnement. On distingue :
- le mode continu : la puissance d'excitation ne varie pas, le rayon laser n'est pas interrompu, la puissance obtenue ne varie pas dans le temps;
- le mode Q-switché : la puissance d'excitation reste constante, le rayon laser est interrompu dans la cavité et emmagasiné dans le milieu actif, il est ensuite brusquement relâché, ce qui donne naissance à une onde de forte puissance instantanée.
- le mode puisé : la puissance d'excitation n'est pas continue mais délivrée sous la forme d'impulsions; on envoie dans la cavité des pics d'énergie élevés qui permettent d'obtenir de fortes puissances de crêtes du laser.

### Type de laser employé : Yag avec multiplicateur de fréquence.

| Yag / YVO4 | doublé | triplé | quadruplé |
|---|---|---|---|
| 1064 ou 1050 nm | 532 nm | 354 nm | 266 nm |

### Durée d'impulsion

| | | | |
|---|---|---|---|
| Yag pompé lampe | Yag pompé diode | YVO4 pompé diode | Yag doublé |
| 200 ns à 300 ns | 30 à 50 ns | ≤ 10 ns | 30 ns |

L'action combinée d'un faisceau laser délivré en mode pulsé ou Q-switché et de caractéristiques appropriées de longueur d'onde et de durée d'impulsion avec la présence à taux limité d'un agent masquant et/ou d'un agent colorant permet le marquage en au moins deux couleurs d'un article de caoutchouc de couleur initiale noire ou sombre.

L'invention a également pour objet les articles en caoutchouc comportant en surface un marquage coloré réalisé par un laser et susceptible d'être obtenu par le procédé comportant les étapes suivantes :
- préparation d'une composition de caoutchouc de couleur claire, utilisable pour la fabrication de l'article de façon à former au moins une partie de la surface destinée à être marquée, ladite composition comportant au moins un élastomère et au moins deux agents colorants de couleurs claires différentes donnant, après mélange, sa couleur initiale à ladite composition;
- incorporation dans la composition précédemment obtenue d'un agent masquant de couleur sombre ou noire avec un taux inférieur à 15 pce (parties en poids pour 100 parties d'élastomère(s)) pour assombrir et/ou masquer la couleur initiale de la composition de caoutchouc;
- confection, moulage de l'article comportant au moins la composition de caoutchouc;
- réalisation de la première partie du motif sur la surface à marquer de l'article au moyen d'un laser délivrant un faisceau d'impulsions de longueur d'onde et de durée d'impulsions appropriées pour interagir avec l'agent masquant, ledit motif obtenu ayant sensiblement la couleur obtenue par le mélange des agents colorants, cette couleur contrastant avec la couleur sombre ou noire de la surface voisine de l'article;
- sur cette première partie de motif, réalisation de la deuxième partie du motif d'une couleur différente de la couleur de la partie de motif obtenue à l'étape précédente, au moyen d'un laser délivrant un faisceau d'impulsions de longueur d'onde et de durée d'impulsions appropriées pour interagir avec l'un des agents colorants présents dans le matériau après la première étape.

Le procédé selon l'invention peut être appliqué au marquage d'un article non vulcanisé comportant en surface une composition de caoutchouc crue comme à celui d'un article vulcanisé comportant en surface une composition de caoutchouc cuite.

Afin d'avoir une composition de caoutchouc présentant des caractéristiques mécaniques satisfaisantes (comme par exemple le module d'extension), il est connu d'incorporer dans ladite composition au moins une charge renforçante. Cet effet de renforcement peut être atteint par au moins un des agents colorants employés dès lors qu'il exerce cette fonction ou bien par l'adjonction d'une charge renforçante complémentaire.

Dans le procédé de marquage selon l'invention, l'augmentation des fréquences d'impulsion du laser permet de réduire sensiblement le temps de réalisation d'un motif coloré.

À titre d'agents colorants de couleur claire conviennent notamment toutes les charges blanches comme par exemple de la silice, de l'alumine, des argiles, des hydrates ou oxydes d'aluminium et/ou de magnésium, la bentonite, le talc, la craie, le kaolin, l'oxyde de titane. Il est remarquable de noter qu'il est possible d'employer jusqu'à 100 pce d'oxyde de titane sans incompatibilité avec le procédé selon l'invention.

À titre d'agents colorants de couleur claire conviennent également les charges colorées pouvant être des charges naturellement colorées, ou encore obtenues par une opération préalable de coloration, par exemple une silice ou une alumine.

Pour la mise en oeuvre de l'invention, on peut utiliser, comme agent colorant de couleur claire, tout type d'agent colorant connu de l'homme du métier, cet agent colorant pouvant être organique ou inorganique. À titre d'exemple, on peut citer des pigments minéraux tels que par exemple des poudres métalliques, notamment du cuivre ou de l'aluminium, ou divers oxydes métalliques, des silicates, des aluminates, des titanates, des oxydes ou hydroxydes de fer, des oxydes mixtes d'éléments métalliques différents tels que Co, Ni, Al, Zn, des pigments organiques, tels que par exemple des pigments polycycliques comme les diarylides xylidides, complexes comme les phtalocyanines de cuivre.

L'invention ainsi que ses avantages seront aisément compris à la lumière de la description accompagnant des exemples de réalisation présentés ci-après.

Pour tous les exemples présentés, on part d'une même composition de caoutchouc (matrice de base) pouvant rentrer dans la fabrication d'un pneumatique et comportant
- 100 parties d'élastomères : un coupage de gomme naturelle, de polybutadiène et d'EPDM (terpolymère d'éthylène-propylène-diène);
- 40 pce de silice comme charge renforçante (i.e. 40 parties de silice pour 100 parties d'élastomères);
- 15 pce de plastifiant;
- 1 pce d'acide stéarique;
- 3 pce d'oxyde de zinc;
- 3 pce de soufre.

Par N pce, on entend N parties en poids pour cent parties du mélange d'élastomères.

Dans un premier exemple, on a tout d'abord ajouté à la matrice de base :
- 100 pce d'oxyde de titane, et
- 20 pce de pigment rouge Ciba DPP DP conférant une couleur rose à cette matrice.

Ensuite, il a été ajouté :
- 5 pce de noir de carbone N772, jouant le rôle d'agent masquant la couleur rose et conférant à la composition une couleur "vieux rose".

Avec cette composition, une plaque de caoutchouc de 15 X15 cm et d'épaisseur 2.5 mm a été moulée et vulcanisée (conditions de vulcanisation : 150°C, pression supérieure à 10 bars, pendant 25 mn).

Avec un laser type YAG (pompé diodes) utilisé en mode Q-switché à la longueur d'onde de 1064 nm et à une fréquence de 500 Hz, avec une intensité de lampe de 12 A et une vitesse de balayage de 100 mm/s, on obtient, dans un premier temps, un motif de couleur rose contrastant avec la couleur "vieux rose" de la plaque.

Dans un deuxième temps, on termine la réalisation du motif par la formation d'une deuxième partie colorée en blanc (blanc très légèrement rosé) sur la première partie de couleur rose. Pour cela on utilise un laser YAG (pompé diodes) à doubleur de fréquence (c'est-à-dire à une longueur d'onde de 532 nm), en mode Q-switché à une fréquence comprise entre 500 et 1800 Hz, avec une intensité comprise entre 19 et 22 A et à une vitesse de balayage de 100 mm/s.

L'ajustement de la valeur de la fréquence permet d'obtenir à volonté différentes nuances de blanc rosé.

D'autres exemples de réalisation ont été conduits à partir de la même matrice de base et des résultats comparables ont été obtenus en remplaçant le pigment colorant rouge par le pigment vert SARMAGUM 60 D, ou le pigment bleu Ciba microlein BCS, ou le pigment jaune SARMAGUM 60 A ou encore la poudre d'aluminium Sylber Line.

Ci-après sont rassemblés dans un tableau différents résultats obtenus avec la même composition et différents couples de pigments colorants :

| agent masquant | pigment 1 | pigment 2 | couleur initiale | 1er motif | 2e motif |
|---|---|---|---|---|---|
| noir de carbone | rouge BRN | vert GFNP | marron noir | violet | vert |
| noir de carbone | rouge BRN | bleu A3R | noir | violet | bleu |
| noir de carbone | rouge BRN | jaune 3G | marron | orange | jaune |

La couleur de chaque marquage (premier et deuxième motif) obtenu au moyen du procédé selon l'invention peut varier dans une gamme très étendue : par d'exemple, dans différentes nuances de rouge, orange, vert, jaune, bleu, métallisées ou non.

De manière avantageuse, la composition de caoutchouc se prêtant à un marquage selon le procédé de l'invention peut être employée pour la réalisation d'une plaque ou d'un film mince de caoutchouc destinée à être appliqué de manière permanente ou non, par exemple, sur la surface extérieure d'un article, notamment un pneumatique, à l'image d'une décalcomanie.

L'emploi d'un faisceau laser en mode impulsionnel, permet de réaliser, sur cette plaque ou film, tout motif souhaité ayant au moins deux couleurs contrastant avec la couleur initiale sombre ou noire de ladite plaque ou film.

L'emploi de cette composition sous une forme fluide est également envisagée pour revêtir une surface d'un article, notamment un pneumatique, à marquer avec un motif d'au moins deux couleurs contrastant avec la couleur sombre ou noire de ladite composition.

De façon préférentielle, la composition de caoutchouc de couleur sombre ou noire et destinée à être marquée par le procédé selon l'invention est protégée contre le vieillissement photooxydant par l'incorporation dans la composition d'un système anti-photo-oxydant, photo-stable et non tachant vis-à-vis de cette composition, par exemple tel que défini dans la demande de brevet international PCT/EP 98/04150.

Le procédé qui vient d'être décrit appliqué à des compositions de caoutchouc pour pneumatique peut être aisément adapté à des matériaux plastiques en général pour l'obtention de motifs colorés présentant au moins deux couleurs différentes de la couleur initiale du matériau.

Afin de protéger le marquage, il est en outre possible de revêtir au préalable la composition de caoutchouc destinée à être marquée par une couche en mélange translucide, ce mélange translucide étant choisi pour laisser passer les faisceaux d'impulsions délivrés par le laser afin de réaliser le marquage sur la composition sous-jacente.

## Revendications

1. Procédé de marquage d'un article en caoutchouc pourvu d'au moins une surface de couleur sombre ou noire, pour réaliser un motif formé d'au moins deux couleurs différentes et contrastant sur ledit article, ledit procédé comportant les étapes suivantes :
- préparation d'une composition de caoutchouc de couleur claire, utilisable pour la fabrication de l'article de façon à former au moins une partie de la surface destinée à être marquée, ladite composition comportant au moins un élastomère et au moins deux agents colorants de couleurs claires différentes donnant, après mélange, sa couleur initiale à ladite composition;
- incorporation dans la composition précédemment obtenue d'un agent masquant de couleur sombre ou noire dans une proportion inférieure à 15 parties en poids pour 100 parties d'élastomère(s) pour assombrir ou masquer la couleur initiale de la composition de caoutchouc;
- confection, moulage de l'article comportant au moins ladite composition de caoutchouc de couleur sombre ou noire;
- réalisation de la première partie du motif sur la surface à marquer de l'article au moyen d'un laser délivrant un faisceau d'impulsions de longueur d'onde appropriée pour interagir avec l'agent masquant, ledit motif obtenu ayant une couleur claire et contrastant avec la couleur sombre ou noire de la surface voisine de l'article, ladite couleur étant sensiblement la même que celle obtenue par le mélange des agents colorants;
- sur la première partie du motif, réalisation de la deuxième partie du motif d'une couleur différente de la couleur de la partie de motif obtenue à l'étape précédente, au moyen d'un laser délivrant un faisceau d'impulsions de longueur d'onde appropriée pour interagir avec l'un des agents colorants présents dans le matériau après la première étape.

2. Procédé selon la revendication 1 **caractérisé en ce que** l'un au moins des agents colorants de couleur claire est choisi parmi les charges suivantes : silice, alumine, argiles, hydrates ou oxydes d'aluminium et/ou de magnésium, bentonite, talc, craie, kaolin, oxyde de titane.

3. Procédé selon la revendication **1 caractérisé en ce que** les agents colorants sont des pigments photosensibles à différentes longueurs d'onde et de couleur non noire.

4. Procédé selon l'une des revendications 1, 2 ou 3 **caractérisé en ce que** l'agent masquant de couleur sombre ou noire est choisi parmi les charges suivantes : noir de carbone, pigments minéraux de couleur sombre ou noire.

5. Procédé selon l'une quelconque des revendications 1 à 4 **caractérisé en ce que** la composition de caoutchouc destinée à être marquée comporte en outre au moins un agent anti-photo-oxydant afin de protéger et assurer la stabilité de la couleur du motif réalisé sur la surface du pneumatique.

6. Procédé selon l'une des revendications **1** à **5 caractérisé en ce que** la longueur d'onde du faisceau laser est choisie entre 200 et 1064 nm.

7. Procédé de marquage selon l'une des revendications **1** à **6 caractérisé en ce que** la durée d'impulsion du laser est choisie entre 300 nanosecondes et quelques dizaines de nanosecondes.

8. Article en caoutchouc, notamment un pneumatique, comportant sur une de ses surfaces au moins un marquage de couleur faisant un contraste avec la couleur sombre ou noire dudit article après vulcanisation, ledit marquage de couleur étant susceptible d'être réalisé selon un procédé comportant les étapes suivantes :
- préparation d'une composition de caoutchouc de couleur claire, utilisable pour la fabrication de l'article de façon à former au moins une partie de la surface destinée à être marquée, ladite composition comportant au moins un élastomère et au moins deux agents colorants de couleurs claires différentes donnant sa couleur initiale à ladite composition;
- incorporation dans la composition précédemment obtenue d'un agent masquant de couleur sombre ou noire avec un taux inférieur à 15 pce pour assombrir et/ou masquer la couleur initiale de la composition de caoutchouc;
- confection, moulage de l'article comportant au moins la composition de caoutchouc;
- réalisation de la première partie du motif sur la surface à marquer de l'article au moyen d'un laser délivrant un faisceau d'impulsions de longueur d'onde et de durée d'impulsions appropriées pour interagir avec l'agent masquant, ledit motif obtenu ayant sensiblement la couleur obtenue par le mélange des agents colorants, cette couleur contrastant avec la couleur sombre ou noire de la surface voisine de l'article;
- sur cette première partie de motif, réalisation de la deuxième partie du motif d'une couleur différente de la couleur de la partie de motif obtenue à l'étape précédente, au moyen d'un laser délivrant un faisceau d'impulsions de longueur d'onde et de durée d'impulsions appropriées pour interagir avec l'un des agents colorants présents dans le matériau après la première étape.

## Patentansprüche

1. Verfahren zur Markierung eines Gegenstands aus Kautschuk, der mit mindestens einer dunkel oder schwarz gefärbten Oberfläche versehen ist, zur Erzeugung eines Musters, das aus mindestens zwei verschiedenen und kontrastierenden Farben gebildet ist, auf diesem Gegenstand, wobei das Verfahren die folgenden Schritte umfaßt:
- Herstellen einer hell gefärbten Kautschukzusammensetzung, die für die Erzeugung des Gegenstands verwendbar ist, aus der mindestens ein Teil der Oberfläche gebildet ist, die dafür vorgesehen ist, markiert zu werden, wobei die Zusammensetzung mindestens ein Elastomer und mindestens zwei verschiedene helle Farbmittel enthält, die der Zusammensetzung nach dem Vermischen ihre anfängliche Farbe geben;
- Einarbeiten eines dunkel gefärbten oder schwarzen Maskierungsmittels in einem Anteil von weniger als 15 Gewichtsteilen pro 100 Gewichtsteile des oder der Elastomere in die oben erhaltene Zusammensetzung, um die anfängliche Farbe der Kautschukzusammensetzung zu verdunkeln oder zu maskieren;
- Konfektionieren, Formen des Gegenstands, der mindestens die dunkel oder schwarz gefärbte Kautschukzusammensetzung enthält;
- Erzeugen des ersten Teils des Musters auf der zu markierenden Oberfläche des Gegenstands mit Hilfe eines Lasers, der einen gepulsten Laserstrahl mit einer solchen Wellenlänge aussendet, daß er für eine Wechselwirkung mit dem Maskierungsmittel geeignet ist, wobei das erhaltene Muster eine helle und mit der dunklen oder schwarzen Farbe der benachbarten Oberfläche des Gegenstands kontrastierende Farbe aufweist, wobei die Farbe im wesentlichen mit der Farbe übereinstimmt, die durch das Vermischen der Farbmittel erhalten wird,
- Erzeugen des zweiten Teils des Musters in einer Farbe, die von der Farbe des im vorherigen Verfahrensschritt erhaltenen ersten Teils des Musters verschieden ist, auf dem ersten Teil des Musters mit Hilfe eines Lasers, der einen gepulsten Laserstrahl mit einer solchen Wellenlänge aussendet, daß er für eine Wechselwirkung mit einem der Farbmittel, die nach dem ersten Verfahrensschritt in dem Material vorhanden sind, geeignet ist.

2. Verfahren nach Anspruch 1, **dadurch gekennzeichnet, daß** mindestens eines der hellen Farbmittel unter den folgenden Füllstoffen ausgewählt wird: Kieselsäure, Aluminiumoxid bzw. Tonerde, Tonen, Hydraten oder Oxiden von Aluminium und/oder Magnesium, Bentonit, Talk, Kreide, Kaolin, Titandioxid.

3. Verfahren nach Anspruch 1, **dadurch gekennzeichnet, daß** die Farbmittel nicht-schwarze Pigmente sind, die bei verschiedenen Wellenlängen lichtempfindlich sind.

4. Verfahren nach einem der Ansprüche 1, 2 und 3, **dadurch gekennzeichnet, daß** das dunkel gefärbte oder schwarze Maskierungsmittel unter den folgenden Füllstoffen ausgewählt wird: Ruß, dunkel gefärbten oder schwarzen anorganischen Pigmenten.

5. Verfahren nach einem der Ansprüche 1 bis 4, **dadurch gekennzeichnet, daß** die Kautschukzusammensetzung, die dafür vorgesehen ist, markiert zu werden, außerdem mindestens ein die Photooxidation verhinderndes Mittel enthält, das die Stabilität der Farbe des auf der Oberfläche des Luftreifens erzeugten Musters schützt und gewährleistet.

6. Verfahren nach einem der Ansprüche 1 bis 5, **dadurch gekennzeichnet, daß** die Wellenlänge des Laserstrahls im Bereich von 200 bis 1064 nm ausgewählt wird.

7. Markierungsverfahren nach einem der Ansprüche 1 bis 6, **dadurch gekennzeichnet, daß** die Dauer der Laserpulse im Bereich von 300 ns (Nanosekunden) bis einigen 10 ns gewählt wird.

8. Gegenstand aus Kautschuk, insbesondere Luftreifen, der auf einer seiner Oberflächen mindestens eine farbige Markierung aufweist, die mit der dunklen oder schwarzen Farbe des Gegenstands nach der Vulkanisation einen Kontrast bildet, wobei die farbige Markierung nach einem Verfahren erzeugt werden kann, das die folgenden Schritte umfaßt:
- Herstellen einer hell gefärbten Kautschukzusammensetzung, die für die Erzeugung des Gegenstands verwendbar ist, aus der mindestens ein Teil der Oberfläche gebildet ist, die dafür vorgesehen ist, markiert zu werden, wobei die Zusammensetzung mindestens ein Elastomer und mindestens zwei verschiedene helle Farbmittel enthält, die der Zusammensetzung ihre anfängliche Farbe geben;
- Einarbeiten eines dunkel gefärbten oder schwarzen Maskierungsmittels in einem Anteil von weniger als 15 pce in die oben erhaltene Zusammensetzung, um die anfängliche Farbe der Kautschukzusammensetzung zu verdunkeln oder zu maskieren;
- Konfektionieren, Formen des Gegenstands, der mindestens die Kautschukzusammensetzung enthält;
- Erzeugen des ersten Teils des Musters auf der zu markierenden Oberfläche des Gegenstands mit Hilfe eines Lasers, der einen gepulsten Laserstrahl mit einer solchen Wellenlänge und Pulsdauer aussendet, daß er für eine Wechselwirkung mit dem Maskierungsmittel geeignet ist, wobei das erhaltene Muster im wesentlichen die Farbe aufweist, die durch Vermischen der Farbmittel erhalten wird, wobei diese Farbe mit der dunklen oder schwarzen Farbe der benachbarten Oberfläche des Gegenstands kontrastiert,
- Erzeugen des zweiten Teils des Musters in einer Farbe, die von der Farbe des im vorherigen Verfahrensschritt erhaltenen ersten Teils des Musters verschieden ist, auf dem ersten Teil des Musters mit Hilfe eines Lasers, der einen gepulsten Laserstrahl mit einer solchen Wellenlänge und Pulsdauer aussendet, daß er für eine Wechselwirkung mit einem der Farbmittel, die nach dem ersten Verfahrensschritt in dem Material vorhanden sind, geeignet ist.

## Claims

1. A process for marking a rubber article provided with at least one dark or black surface in order to create a pattern formed by at least two different colours contrasting with the said article, the said process having the following steps:
- preparing a light-coloured rubber composition which can be used to manufacture the article in such a way as to form at least part of the surface intended to be marked, the said composition having at least one elastomer and at least two colouring agents of different light colours giving the said composition its initial colour after mixing;
- incorporating into the previously obtained composition a dark or black masking agent in a quantity of less than 15 parts by weight per hundred parts of elastomer, to darken or mask the initial colour of the rubber composition;
- building up or moulding the article having at least the said dark or black rubber composition;
- creating the first part of the pattern on the surface of the article which is to be marked by means of a laser supplying a pulsed beam of appropriate wavelength for interaction with the masking agent, the said pattern obtained having a light colour and contrasting with the dark or black colour of the adjacent surface of the article, the said colour being substantially the same as that obtained from the blend of colouring agents;
- on the first part of the pattern, creating the second part of the pattern in a different colour from the colour of the part of the pattern obtained in the preceding step, by means of a laser supplying a pulsed beam of appropriate wavelength for interaction with one of the colouring agents present in the material after the first step.

2. A process according to Claim 1, **characterised in that** at least one of the light colouring agents is selected from the following fillers: silica, alumina, clays, aluminium and/or magnesium hydrates and oxides, bentonite, talc, chalk, kaolin and titanium oxide.

3. A process according to Claim **1**, **characterised in that** the colouring agents are photo-sensitive pigments having different wavelengths and being a colour other than black.

4. A process according to one of Claims 1, 2 or 3, **characterised in that** the dark or black masking agent is selected from the following fillers: carbon black and dark or black inorganic pigments.

5. A process according to any of Claims 1 to 4, **characterised in that** the rubber composition intended to be marked also has at least one anti-photo-oxidising agent in order to protect and ensure the stability of the colour of the pattern created on the surface of the tyre.

6. A process according to one of Claims **1** to **5**, **characterised in that** the wavelength of the laser beam is selected to be between 200 and 1064 nm.

7. A process for marking according to one of Claims **1** to **6**, **characterised in that** the pulse duration of the laser is selected to be between 300 nanoseconds and a few tens of nanoseconds.

8. A rubber article, in particular a tyre, having on one of its surfaces at least one coloured marking contrasting with the dark or black colour of the said article after vulcanisation, the said coloured marking being capable of being produced in accordance with a process having the following steps:
- preparing a light-coloured rubber composition which can be used to manufacture the article in such a way as to form at least part of the surface intended to be marked, the said composition having at least one elastomer and at least two colouring agents of different light colours giving the said composition its initial colour;
- incorporating into the previously obtained composition a dark or black masking agent in a quantity of less than 15 ppc to darken and/or mask the initial colour of the rubber composition;
- building up or moulding the article having at least the rubber composition;
- creating the first part of the pattern on the said surface of the article which is to be marked by means of a laser supplying a pulsed beam of appropriate wavelength and pulse duration for interaction with the masking agent, the said pattern obtained having substantially the colour obtained from the blend of colouring agents, this colour contrasting with the dark or black colour of the adjacent surface of the article;
- on this first part of the pattern, creating the second part of the pattern in a different colour from the colour of the part of the pattern obtained in the preceding step, by means of a laser supplying a pulsed beam of appropriate wavelength and pulse duration for interaction with one of the colouring agents in the material after the first step.
